# EUROPEAN PATENT APPLICATION

(11) **EP 4 756 393 A1**
(43) Date of publication of application: **10.06.2026**
(21) Application number: 25219553.2
(22) Date of filing: 28.11.2025
(51) Int. Cl.: G01L 5/24, G01L 3/00, H01R 4/30

(54) **TORQUE INDICATING APPARATUS FOR ELECTRICAL DEVICE AND ELECTRICAL DEVICE**

(30) Priority: 06.12.2024 CN 202423015493 U
(71) Applicant: SCHNEIDER ELECTRIC INDUSTRIES SAS, 92500 Rueil-Malmaison (FR)
(72) Inventor: QIU, Weibing, Shanghai, 201203 (CN)
(74) Representative: Plasseraud IP

(57) **Abstract**

A torque indicating apparatus includes a torsion member and an indicator. During a process of a bolt being screwed into a threaded hole of the electrical device, the torsion member is adapted to be pressed by the bolt and undergo deformation. The torsion member includes: a pair of elastic parts, adapted to contact the bolt to be pressed and move closer to each other during the process of the bolt being screwed into the threaded hole; a pair of extending parts respectively coupled to the pair of elastic parts and adapted to extend along an axial direction of the bolt; and a connecting part arranged between the pair of extending parts and coupled to the pair of extending parts. The indicator is movably coupled to a housing and adapted to move between a looseness position and a tightness position in response to the deformation of the torsion member.

## Description

### FIELD

Example embodiments of the present disclosure relate generally to the field of electrical devices, and in particular to a torque indicating apparatus for an electrical device and an electrical device.

### BACKGROUND

Electrical devices are widely used in links such as power generation, power transmission, power transformation, power distribution, and power consumption, and play roles in controlling, protecting, regulating, converting, and switching on-off electric power. Electrical devices are usually coupled to wiring lines through wiring terminals. Specifically, a user inserts a wiring line into a wiring terminal and screws a bolt of the wiring terminal, so that the wiring line is fixedly pressed into the wiring terminal by the bolt.

However, when a user screws the bolt, they often cannot accurately control the screwing torque of the bolt, and loose connection and heating are prone to occur between the wiring terminal and the wire.

### SUMMARY

In a first aspect of the present disclosure, a torque indicating apparatus for an electrical device is provided. The torque indicating apparatus includes a torsion member and an indicator. The torsion member is arranged in a housing of the electrical device and coupled to a bolt of the electrical device. During a process of the bolt being screwed into a threaded hole of the electrical device to a predetermined position, and the torsion member is adapted to be pressed by the bolt and undergo deformation. The torsion member includes: a pair of elastic parts, spaced apart from each other by a predetermined distance, and adapted to contact the bolt to be pressed and move closer to each other during the process of the bolt being screwed into the threaded hole to the predetermined position; a pair of extending parts respectively coupled to the pair of elastic parts and adapted to extend along an axial direction of the bolt; and a connecting part arranged between the pair of extending parts and coupled to the pair of extending parts. The indicator is movably coupled to the housing of the electrical device and adapted to move between a looseness position and a tightness position in response to the deformation of the torsion member. In the looseness position, the indicator indicates that a torque between the bolt and the threaded hole is lower than a predetermined torque requirement, and in the tightness position, the indicator indicates that the torque between the bolt and the threaded hole reaches or exceeds the predetermined torque requirement. The pair of elastic parts of the torsion member may be arranged along a radial direction of the bolt.

In some embodiments, the indicator includes: a body; an indicating end arranged at an end of the body and adapted to extend towards an indicating window of the housing; and a contact end arranged at the other end of the body opposite to the end and contacting the torsion member or the bolt, wherein during a position change of the torsion member or the bolt, the contact end is adapted to drive the indicating end to move between the looseness position aligned with the indicating window and the tightness position offset from the indicating window.

In some embodiments, the indicator further includes: a pair of rotating parts respectively arranged on two opposite sides of the body, where the pair of rotating parts are aligned along an axis, respectively coupled to the housing, and rotate about the axis relative to the housing.

In some embodiments, the torque indicating apparatus further includes: a spring arranged between the indicator and the housing, and coupled to the indicator and the housing.

In some embodiments, the indicator further includes: an avoidance groove arranged at the contact end and partially surrounding an outer side of the bolt.

In some embodiments, the pair of elastic parts are arranged at an end portion of the bolt and contact the end portion of the bolt, so as to be pressed by the end portion of the bolt and undergo deformation during the process of the bolt being screwed into the threaded hole to the predetermined position.

In some embodiments, the connecting part includes a through hole to allow the bolt to pass through.

In some embodiments, the indicator abuts against the connecting part of the torsion member.

In some embodiments, the pair of elastic parts are arranged at a head of the bolt and contact the head of the bolt, so as to be pressed by the head of the bolt and undergo deformation during the process of the bolt being screwed into the threaded hole to the predetermined position.

In some embodiments, the torsion member includes a pair of coupling grooves respectively formed on a side of the pair of elastic parts facing the bolt, and partially surrounding an outer periphery of the bolt.

In some embodiments, the indicator abuts against the head of the bolt.

In some embodiments, a middle segment of the connecting part is bent towards a side of the elastic part.

In some embodiments, a middle segment of a first extending part of the pair of extending parts is bent towards a second extending part of the pair of extending parts.

In the torque indicating apparatus for the electrical device according to some embodiments of the present disclosure, the torsion member is coupled to the bolt of a wiring terminal of the electrical device. When the bolt is coupled to the threaded hole of the electrical device and screwed into the threaded hole, the bolt can press the torsion member and cause it to undergo deformation. During this process, the indicator movably coupled to the electrical device moves from the looseness position to the tightness position in response to the deformation of the torsion member. Thus, a user can determine a degree of bolt tightness (that is, whether the torque between the bolt and the threaded hole reaches the predetermined torque requirement) by observing a position of the indicator, improving the convenience when the user tightens the bolt.

In a second aspect of the present disclosure, an electrical device is provided. The electrical device includes: a housing including a threaded hole; a bolt arranged in the threaded hole and threadedly fitted with the threaded hole; and the torque indicating apparatus according to the first aspect of the present disclosure, arranged in the housing. The housing further includes an indicating window, and the indicator of the torque indicating apparatus is adapted to be partially exposed in the indicating window when it is in the looseness position.

It should be understood that the content described in this content section is not intended to limit key features or important features of embodiments of the present disclosure, nor is it intended to limit the scope of the present disclosure. Other features of the present disclosure will become easy to understand through the following description.

### BRIEF DESCRIPTION OF DRAWINGS

The above and other features, advantages and aspects of embodiments of the present disclosure will become more apparent with reference to the accompanying drawings and the following detailed description. In the drawings, the same or similar reference numerals represent the same or similar elements, wherein:
FIG. 1A shows a schematic diagram of an electrical device according to some embodiments of the present disclosure, where an indicator is in a looseness position and is exposed in an indicating window of a housing;
FIG. 1B shows a schematic diagram of an electrical device according to some other embodiments of the present disclosure, where an indicator is in a tightness position and hidden in the housing;
FIG. 2A shows a schematic diagram of a torque indicating apparatus according to some embodiments of the present disclosure, where a bolt is in a looseness state;
FIG. 2B shows a schematic diagram of a torque indicating apparatus according to some embodiments of the present disclosure, where a bolt is in a tightness state;
FIG. 3A shows a schematic diagram of an overall structure of a torsion member in a natural state without being pressed by a bolt according to some embodiments of the present disclosure;
FIG. 3B shows a schematic diagram of an overall structure of a torsion member in a deformed state after being pressed by a bolt according to some embodiments of the present disclosure;
FIG. 4A shows a schematic diagram of an indicator and a spring according to some embodiments of the present disclosure;
FIG. 4B shows a schematic diagram of an indicator and a spring after being assembled according to some embodiments of the present disclosure;
FIG. 5A shows a schematic diagram of a torsion member in a natural state without being pressed by a bolt according to some other embodiments of the present disclosure;
FIG. 5B shows a schematic diagram of a torsion member in a deformed state after being pressed by a bolt according to some other embodiments of the present disclosure;
FIG. 6A shows a schematic diagram of a torque indicating apparatus according to some other embodiments of the present disclosure, where a bolt is in a looseness state;
FIG. 6B shows a schematic diagram of a torque indicating apparatus according to some other embodiments of the present disclosure, where a bolt is in a tightness state; and
FIG. 7 shows a schematic diagram of a fitting relationship between an indicator and a bolt according to some other embodiments of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are only used for illustrative purposes, and are not intended to limit the protection scope of the present disclosure.

It is noted that the headings of any section/subsection provided herein are not limiting. Various embodiments are described throughout, and any type of embodiment may be included under any section/subsection. Furthermore, embodiments described in any section/subsection may be combined in any manner with any other embodiment described in the same section/subsection and/or different sections/subsections.

In the description of embodiments of the present disclosure, the term "include" and the like should be understood as open-ended inclusion, that is, "including but not limited to". The term "based on" should be understood as "based at least in part on." The term "an embodiment" or "the embodiment" should be understood as "at least one embodiment." The term "some embodiments" should be understood as "at least some embodiments." Other explicit and implicit definitions may also be included below. The terms "first", "second", etc. may refer to different or identical objects. Other explicit and implicit definitions may also be included below.

As briefly mentioned above, in the conventional technology, when a user connects a wire to a wiring terminal of an electrical device, it is prone to a situation where the torque of the bolt tightness fails to reach a predetermined torque requirement. This results in loose connection and heating between the wiring terminal and the wire, thereby causing the wiring terminal of the electrical device and surrounding region to melt. In addition, after the electrical device is used for a long time, the bolt of the wiring terminal is prone to loosening, and such loosening is often difficult to be detected. This also tends to cause loose connection between the wiring terminal and the wire.

A torque indicating apparatus for an electrical device and an electrical device provided according to the present disclosure solve or at least partially solve the above problems and other potential problems existing in traditional solution. In the torque indicating apparatus for the electrical device according to some embodiments of the present disclosure, a torsion member is coupled to a bolt of a wiring terminal of the electrical device. When the bolt is coupled to a threaded hole of the electrical device and screwed into the threaded hole, the bolt can press the torsion member and cause it to undergo deformation. During this process, an indicator movably coupled to the electrical device moves from a looseness position to a tightness position in response to the deformation of the torsion member. Thus, a user can determine a degree of bolt tightness (that is, whether the torque between the bolt and the threaded hole reaches the predetermined torque requirement) by observing a position of the indicator.

According to embodiments of the present disclosure, the electrical device may be a device that needs to be connected to a wiring line or a wire in various fields such as power generation, power distribution, and power consumption. For example, the electrical device may be a circuit breaker, a power distribution cabinet, a switchgear, a motor, etc. Hereinafter, an electrical device and a torque indicating apparatus installed at the wiring terminal of the electrical device will mainly be described by taking a circuit breaker as an example. It should be understood that the same applies to other types of electrical devices, which will not be repeated in the present disclosure. In addition, structures such as the bolt, the threaded hole mentioned according to embodiments of the present disclosure may be understood as the bolt and the threaded hole at the wiring terminal of the electrical device. The term "a head of the bolt" used according to embodiments of the present disclosure refers to an end of the bolt formed with a driving slot for coupling with a tool, for example, the head of the bolt may be an end of the bolt provided with a cross slot for coupling with a screwdriver. Similarly, the term "an end portion of the bolt" may be an end of the bolt away from the "head".

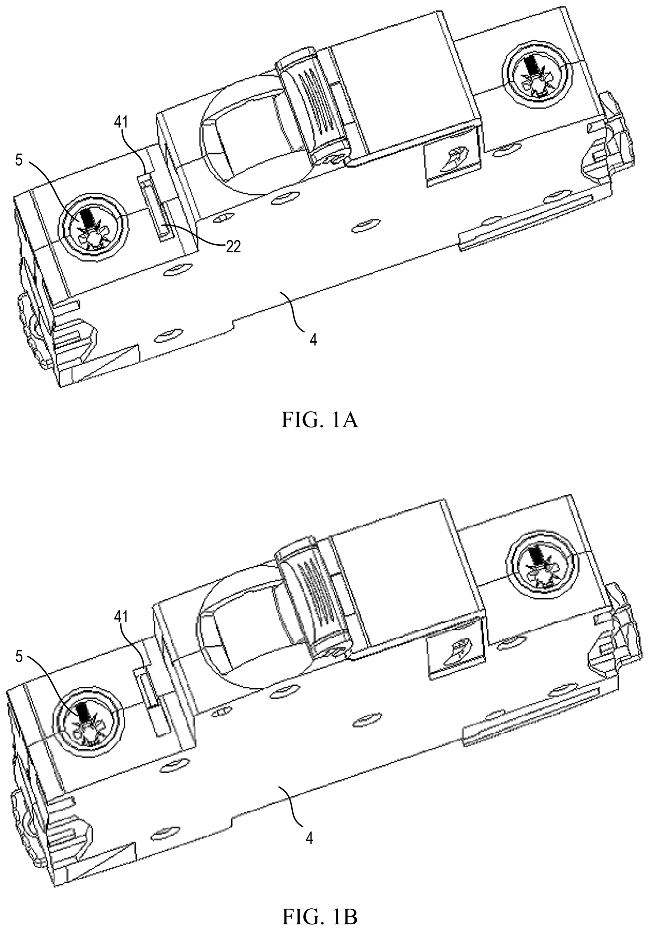

FIG. 1A shows a schematic diagram of an electrical device according to some embodiments of the present disclosure, where an indicator 2 is in a looseness position and exposed in an indicating window 41 of a housing 4. FIG. 1B shows a schematic diagram of an electrical device according to some other embodiments of the present disclosure, where the indicator 2 is in a tightness position and hidden in the housing 4. As shown in FIGS. 1A and 1B, the electrical device generally includes the housing 4 and a wiring terminal arranged in the housing 4, and the wiring terminal is adapted to fix a wire to a power-receiving element in the electrical device.

A torque indicating apparatus for indicating a tightness degree between a bolt 5 of the wiring terminal and the threaded hole (that is, whether a torque between the bolt 5 and the threaded hole reaches a predetermined requirement) is further arranged in the housing 4 of the electrical device. In some embodiments, the housing 4 is further provided with an indicating window 41, and if the tightness degree between the bolt 5 and the threaded hole does not reach the predetermined requirement (that is, the torque between the bolt 5 and the threaded hole is lower than the predetermined torque requirement), a part of the torque indicating apparatus will be exposed in the indicating window 41. As the bolt 5 is screwed into the threaded hole, the tightness degree between the bolt 5 and the threaded hole reaches the predetermined requirement (that is, the torque between the bolt 5 and the threaded hole reaches or exceeds the predetermined torque requirement), and the part of the torque indicating apparatus exposed in the indicating window 41 is moved and hidden under the housing. Thus, the user can determine whether the bolt 5 has been tightened in place through the indicating window 41.

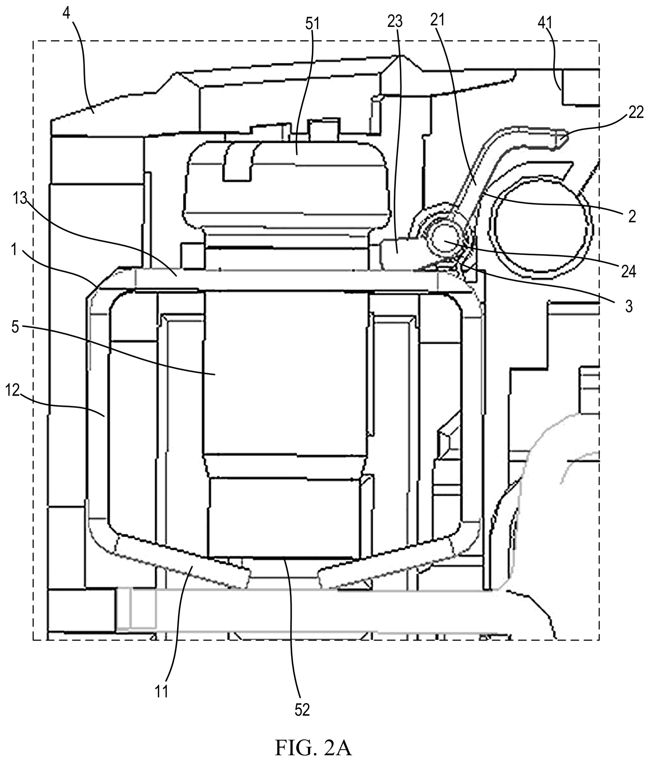

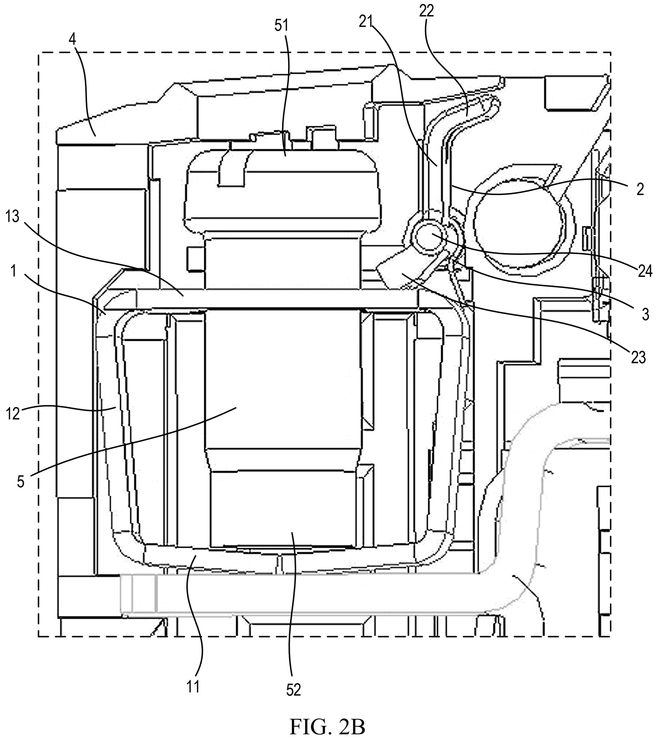

FIG. 2A shows a schematic diagram of a torque indicating apparatus according to some embodiments of the present disclosure, where the bolt 5 is in a looseness state. FIG. 2B shows a schematic diagram of a torque indicating apparatus according to some embodiments of the present disclosure, where the bolt 5 is in a tightness state. As shown in FIG. 2, the torque indicating apparatus includes a torsion member 1 and an indicator 2. The torsion member 1 is coupled to the bolt 5, and the torsion member 1 is adapted to be pressed by the bolt 5 and undergo elastic deformation during a process of the bolt 5 being fitted with the threaded hole. The indicator 2 is adapted to move according to the deformation of the torsion member 1 or a position change of the bolt 5, and thereby prompt the user whether the torque between the bolt 5 and the threaded hole reaches the predetermined requirement.

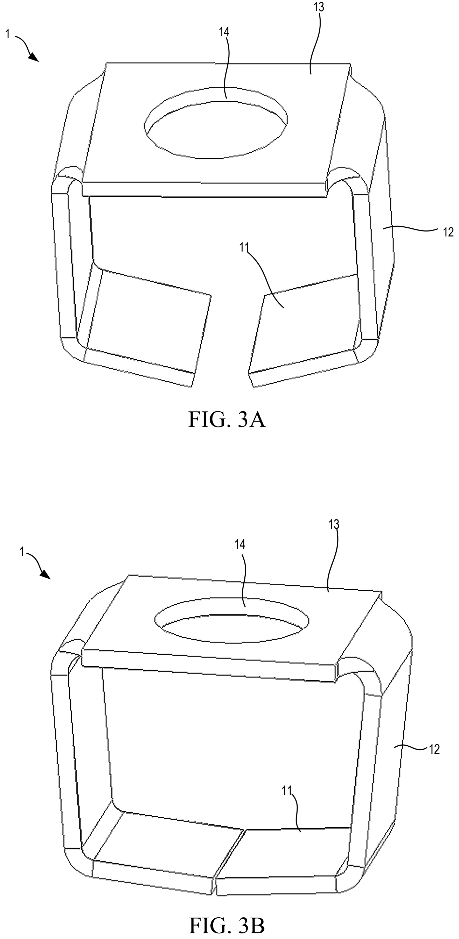

FIG. 3A and FIG. 3B respectively show schematic diagrams of the overall structure of the torsion member 1 in different states according to some embodiments of the present disclosure. In FIG. 3A, the torsion member 1 is in a natural state without being pressed by the bolt 5, and in FIG. 3B, the torsion member 1 is in a deformed state after being pressed by the bolt 5. As shown in FIGS. 3A and 3B, the torsion member 1 includes a connecting part 13, a pair of extending parts 12 coupled to the connecting part 13, and a pair of elastic parts 11 respectively coupled to the pair of connecting parts 13. The connecting parts 13 extend in a radial direction of the bolt 5. The pair of extending parts 12 are respectively coupled to two ends of the connecting part 13 in the radial direction, and extend along an axial direction of the bolt 5. The pair of elastic parts 11 are arranged along the radial direction of the bolt 5, and the pair of elastic parts 11 are spaced apart from each other by a predetermined distance. The pair of elastic parts 11 are respectively coupled to ends of the pair of extending parts 12 away from the connecting part 13. In some embodiments, the connecting part 13 further includes a through hole 14, and the through hole 14 penetrates through the connecting part 13 to allow the bolt 5 to pass through.

In some embodiments, the elastic part 11 is further configured to be gradually far away from the connecting part 13 as it extends towards the axis of the bolt 5. That is, a distance from an end of the elastic part 11 towards the axis of the bolt 5 to the connecting part 13 is greater than a distance from an end of the elastic part 11 towards the extending part 12 to the connecting part 13.

As shown in FIGS. 2A and 2B, during the process of the bolt 5 being screwed into the threaded hole, an end 52 of the bolt 5 may press the pair of elastic parts 11, so that the pair of elastic parts 11 move closer to each other. During this process, the torsion member 1 gradually changes from the natural state shown in FIG. 3A to the deformation state shown in FIG. 3B. Since the bolt 5 needs to overcome the resistance (elastic force) generated by the deformation of the torsion member 1 when being screwed into the threaded hole, if the torsion member 1 undergoes deformation under the contact of the bolt 5 to the deformed state as shown in FIG. 3B, the torque of the bolt 5 in the threaded hole reaches the predetermined requirement.

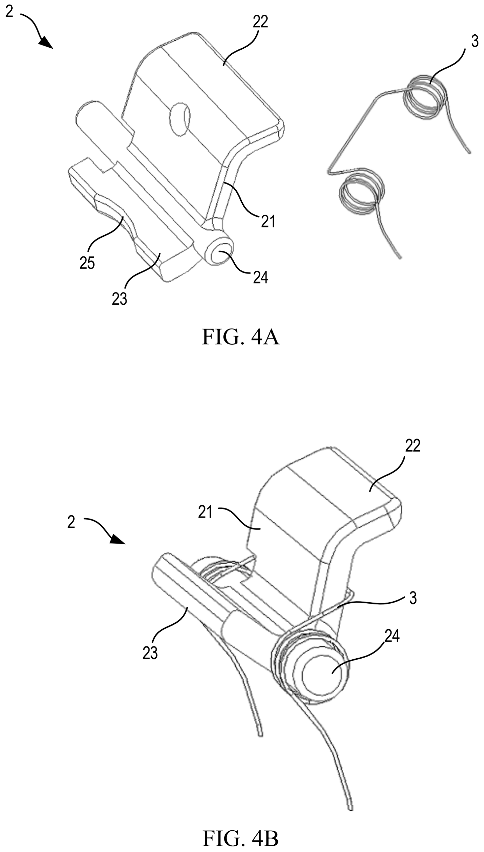

FIG. 4A shows a schematic diagram of an indicator 2 and a spring 3 according to some embodiments of the present disclosure. FIG. 4B shows a schematic diagram of the indicator 2 and the spring 3 after being assembled according to some embodiments of the present disclosure. As shown in FIGS. 4A and 4B, and with reference to FIGS. 2A and 2B, the indicator 2 includes a body 21, and an indicating end 22 and a contact end 23 respectively arranged at two ends of the body 21. The indicating end 22 is coupled to an end of the body 21 facing the indicating window 41 of the housing 4, and the contact end 23 is coupled to an end of the body 21 away from the indicating end 22. The contact end 23 of the indicator 2 is adapted to contact the torsion member 1 or the bolt 5 so as to move during the deformation of the torsion member 1 or the position change of the bolt 5, thereby driving the indicating end 22 to move between a looseness position aligned with the indicating window 41 and a tightness position offset from the indicating window 41.

In some embodiments, the indicator 2 further includes a pair of rotating parts 24, the pair of rotating parts 24 are respectively arranged on two opposite sides of the body 21, and the pair of rotating parts 24 are aligned along an axis. The pair of rotating parts 24 are respectively coupled to the housing 4. For example, the pair of rotating parts 24 are respectively partially embedded in grooves of the housing 4, so that the indicator 2 can rotate about the axis of the rotating parts 24. If the torsion member 1 undergoes deformation, the indicator 2 may rotate about the axis of the rotating parts 24 according to the deformation of the torsion member 1, and the indicating end 22 withdraws from the indicating window 41.

In some other embodiments, the indicator 2 may undergo movements such as translation or deflection during the deformation of the torsion member 1, so that the indicating end 22 of the indicator 2 moves relative to the indicating window 41.

In some embodiments, the indicator 2 is further provided with a spring 3, an end of the spring 3 is coupled to the indicator 2, and the other end of the spring 3 is coupled to any one of the housing 4, the torsion member 1, or the bolt 5. The spring 3 may provide an elastic force to the indicator 2, so that the contact end 23 of the indicator 2 abuts against the torsion member 1 or the bolt 5 more stably. Thus, the indicator 2 may respond quickly and move as the bolt 5 is screwed into the threaded hole. Therefore, the indicator 2 can remind the user whether the screwing of the bolt 5 reaches the predetermined requirement more timely.

In some embodiments, the indicator 2 further includes an avoidance groove 25, the avoidance groove 25 is formed at the contact end 23, and the avoidance groove 25 is arranged as a part of a circle so as to partially surround the peripheral surface of the bolt 5.

Referring back to FIGS. 2A and 2B, the contact end 23 of the indicator 2 abuts against the connecting part 13 of the torsion member 1, and during the process of the bolt 5 being screwed into the threaded hole, the bolt 5 presses the elastic parts 11 of the torsion member 1, causing the connecting part 13 of the torsion member 1 to undergo deformation along with the elastic parts 11. For example, as the pair of elastic parts 11 move closer to each other, the connecting part 13 can approach the elastic parts 11 at least along the axial direction of the bolt 5. Due to the change in position of the connecting part 13, the contact end 23 of the indicator 2 drives the indicator 2 to rotate, causing the indicating end 22 to rotate from the looseness position aligned with the indicating window 41 and the tightness position offset from the indicating window 41. Therefore, if the user fails to observe the indicating end 22 in the indicating window 41, it means that the bolt 5 has been screwed in place.

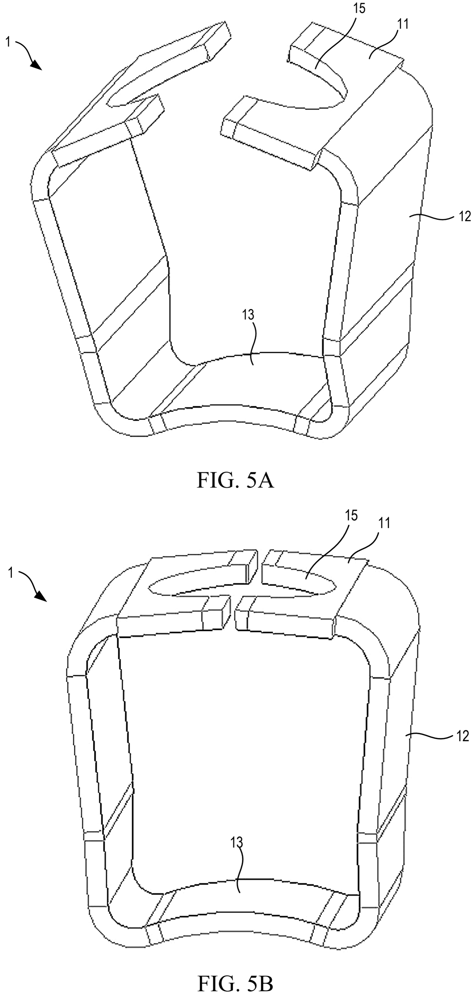

FIGS. 5A and 5B show schematic diagrams of the torsion member 1 according to some other embodiments of the present disclosure, where the torsion member 1 in FIG. 5A is in a natural state without being pressed by the bolt 5, and in FIG. 5B, the torsion member 1 is in a deformed state after being pressed by the bolt 5. Similar to the torsion member 1 described above, the torsion member 1 in FIGS. 5A and 5B includes a connecting part 13, a pair of extending parts 12 coupled to the connecting part 13, and a pair of elastic parts 11 respectively coupled to the pair of extending parts 12. The pair of elastic parts 11 are adapted to contact a head 51 of the bolt 5. The pair of elastic parts 11 may extend towards the axial direction of the bolt 5. In this way, during the process of the bolt 5 being screwed into the threaded hole, the pair of elastic parts 11 contact the head 51 of the bolt 5, and move closer to each other under the pressing of the head 51 of the bolt 5. The torsion member 1 undergoes deformation and provides a reaction force to the bolt 5 at the same time. In some embodiments, the torsion member 1 further includes a pair of coupling grooves 15, the pair of coupling grooves 15 are respectively formed on opposite sides of the pair of elastic parts, and openings of the pair of coupling grooves 15 are arranged to face each other. The bolt 5 may be inserted between the pair of coupling grooves 15, and each of the pair of coupling grooves 15 may partially surround the peripheral surface of the bolt 5.

In some embodiments, a middle segment of the connecting part 13 is bent in a direction towards the elastic part 11. In some other embodiments, a middle segment of each of the pair of extending parts 12 is bent towards the other extending part 12. In this way, during the process of the elastic part 11 being pressed, the extending parts 12 and the connecting part 13 of the torsion member 1 may undergo deformation accordingly, and provide an elastic force to the bolt 5.

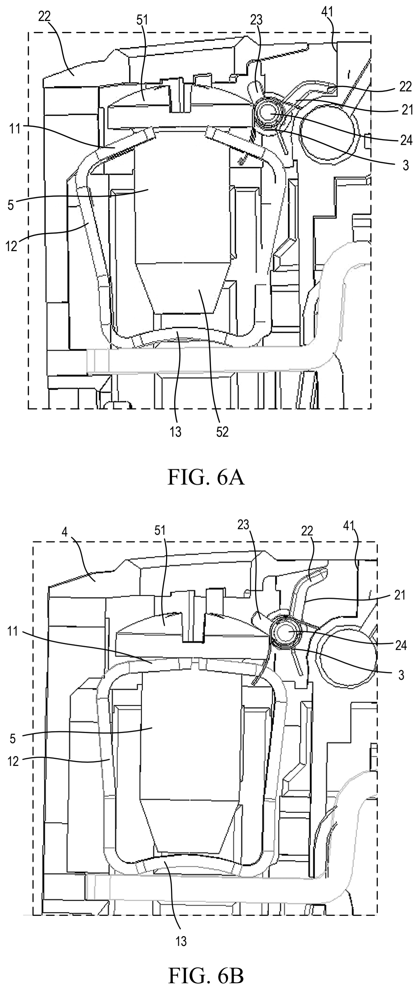

FIG. 6A shows a schematic diagram of the torque indicating apparatus according to some other embodiments of the present disclosure, where the bolt 5 is in the looseness state. FIG. 6B shows a schematic diagram of the torque indicating apparatus according to some other embodiments of the present disclosure, where the bolt 5 is in the tightness state. As shown in FIGS. 6A and 6B, the contact end 23 of the indicator 2 is coupled to the head 51 of the bolt 5, and the spring 3 is coupled between the indicator 2 and the bolt 5. Thus, the contact end 23 of the indicator 2 is pressed tightly against the spring 3, and the indicator 2 is driven to rotate as the bolt 5 is screwed deeper into the threaded hole. Further, the indicating end 22 of the indicator 2 may be rotated from the position exposed in the indicating window 41 (shown in FIG. 6A) to the position offset from the indicating window 41 and hidden in the housing 4 (shown in FIG. 6B). The user can thereby determine that the bolt 5 has been properly screwed into place.

In addition, if the electrical device is used for a long time, the bolt 5 is loosened from the threaded hole, at this point, the indicator 2 rotates, and the indicating end 22 of the indicator 2 is re-exposed in the indicating window 41. Therefore, it is convenient for the user to determine the state of the wiring terminal during maintenance and then perform maintenance.

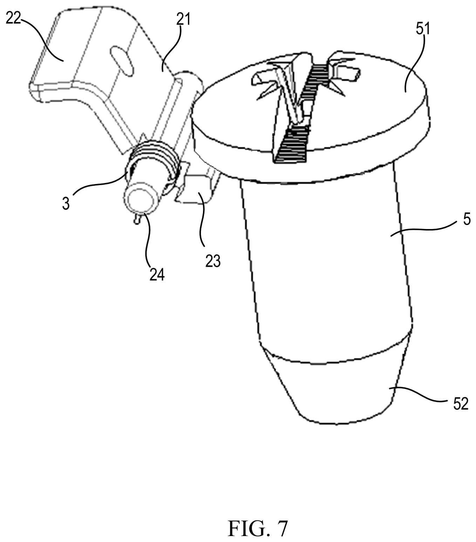

FIG. 7 shows a schematic diagram of a fitting relationship between the indicator 2 and the bolt 5 according to some other embodiments of the present disclosure. As shown in FIG. 7, the contact end 23 of the indicator 2 may be arranged on a side of the head 51 of the bolt 5 facing the end portion 52. During the process of the bolt 5 being screwed into the threaded hole, the contact end 23 of the indicator 2 is clamped by the head 51 of the bolt 5 so as to move along with the movement of the bolt 5.

The implementations of the present disclosure have been described above, and the above description is illustrative, not exhaustive, and is not limited to the disclosed implementations. Many modifications and variations will be apparent to those of ordinary skill in the art without departing from the scope and spirit of the described implementations. The selection of terms used herein is intended to best explain the principles of the implementations, the practical applications, or technical improvement to technologies in the marketplace, or to enable others of ordinary skill in the art to understand the various implementations disclosed herein.

## Claims

1. A torque indicating apparatus for an electrical device, **characterized by** comprising:
a torsion member (1) arranged in a housing (4) of the electrical device and coupled to a bolt (5) of the electrical device, wherein during a process of the bolt (5) being screwed into a threaded hole of the electrical device to a predetermined position, the torsion member (1) is adapted to be pressed by the bolt (5) and undergo deformation, and the torsion member (1) comprises:
a pair of elastic parts (11), spaced apart from each other by a predetermined distance, and adapted to contact the bolt (5) to be pressed and move closer to each other during the process of the bolt (5) being screwed into the threaded hole to the predetermined position;
a pair of extending parts (12) respectively coupled to the pair of elastic parts (11) and adapted to extend along an axial direction of the bolt (5); and
a connecting part (13) arranged between the pair of extending parts (12) and coupled to the pair of extending parts (12); and
an indicator (2) movably coupled to the housing (4) of the electrical device and adapted to move between a looseness position and a tightness position in response to the deformation of the torsion member (1), wherein in the looseness position, the indicator (2) indicates that a torque between the bolt (5) and the threaded hole is lower than a predetermined torque requirement, and in the tightness position, the indicator (2) indicates that the torque between the bolt (5) and the threaded hole reaches or exceeds the predetermined torque requirement.

2. The torque indicating apparatus of claim 1, **characterized in that** the indicator (2) comprises:
a body (21);
an indicating end (22) arranged at an end of the body (21) and adapted to extend towards an indicating window (41) of the housing; and
a contact end (23) arranged at the other end of the body (21) opposite to the end and contacting the torsion member (1) or the bolt (5), wherein during a position change of the torsion member (1) or the bolt (5), the contact end (23) is adapted to drive the indicating end (22) to move between the looseness position aligned with the indicating window (41) and the tightness position offset from the indicating window (41).

3. The torque indicating apparatus of claim 2, **characterized in that** the indicator (2) further comprises:
a pair of rotating parts (24) respectively arranged on two opposite sides of the body (21), wherein the pair of rotating parts (24) are aligned along an axis, respectively coupled to the housing (4), and rotate about the axis relative to the housing (4).

4. The torque indicating apparatus of any of claims 1-3, **characterized by** further comprising:
a spring (3) arranged between the indicator (2) and the housing (4), and coupled to the indicator (2) and the housing (4).

5. The torque indicating apparatus of claim 2 or 3, **characterized in that** the indicator (2) further comprises:
an avoidance groove (25) arranged at the contact end (23) and partially surrounding an outer side of the bolt (5).

6. The torque indicating apparatus of any of claims 1-3, **characterized in that** the pair of elastic parts (11) are arranged at an end portion (52) of the bolt (5) and contact the end portion (52) of the bolt (5), so as to be pressed by the end portion(52) of the bolt (5) and undergo deformation during the process of the bolt (5) being screwed into the threaded hole to the predetermined position.

7. The torque indicating apparatus of claim 6, **characterized in that** the connecting part (13) comprises a through hole (14) to allow the bolt (5) to pass through.

8. The torque indicating apparatus of claim 6, **characterized in that** the indicator (2) abuts against the connecting part (13) of the torsion member (1).

9. The torque indicating apparatus of claim 1, wherein each of the elastic parts (11) is configured to be gradually far away from the connecting part (13) as it extends towards the axis of the bolt (5).

10. The torque indicating apparatus of any of claims 1-3, **characterized in that** the pair of elastic parts (11) are arranged at a head (51) of the bolt (5) and contact the head (51) of the bolt (5), so as to be pressed by the head (51) of the bolt (5) and undergo deformation during the process of the bolt (5) being screwed into the threaded hole to the predetermined position.

11. The torque indicating apparatus of claim 10, **characterized in that** the torsion member (1) comprises a pair of coupling grooves (15) respectively formed on a side of the pair of elastic parts (11) facing the bolt (5), and partially surrounding an outer periphery of the bolt (5).

12. The torque indicating apparatus of claim 10, **characterized in that** the indicator (2) abuts against the head (51) of the bolt (5).

13. The torque indicating apparatus of any of claims 1-3, **characterized in that** a middle segment of the connecting part (13) is bent towards a side of the elastic part (11).

14. The torque indicating apparatus of any of claims 1-3, **characterized in that** a middle segment of a first extending part (12) of the pair of extending parts (12) is bent towards a second extending part (12) of the pair of extending parts (12).

15. An electrical device, **characterized by** comprising:
a housing (4) comprising a threaded hole;
a bolt (5) arranged in the threaded hole and threadedly fitted with the threaded hole; and
the torque indicating apparatus of any of claims 1-14, arranged in the housing, and
wherein the housing (4) further comprises an indicating window (41), and the indicator (2) of the torque indicating apparatus is adapted to be partially exposed in the indicating window (41) when it is in the looseness position.
